# FASCICULE DE BREVET EUROPEEN

(11) **EP 2 130 100 B1**
(45) Date de publication et mention de la délivrance du brevet: **02.10.2013**
(21) Numéro de dépôt: 08710093.9
(22) Date de dépôt: 20.02.2008
(51) Int. Cl.: G05B 19/042

(54) **PROCEDE DE CONFIGURATION D'UNE INSTALLATION DOMOTIQUE ET OUTIL POUR LA MISE EN OEUVRE D'UN TEL PROCEDE**
VERFAHREN ZUM KONFIGURIEREN EINER HAUSAUTOMATISIERUNGSINSTALLATION UND WERKZEUG ZU SEINER IMPLEMENTIERUNG
METHOD FOR CONFIGURING A HOME AUTOMATION INSTALLATION AND TOOL FOR IMPLEMENTING SAME

(30) Priorité: 20.02.2007 FR 0701204
(43) Date de publication de la demande: 09.12.2009
(73) Titulaire: Somfy SAS, 74300 Cluses (FR)
(72) Inventeur: DUPIELET, Norbert, F-74700 Sallanches (FR); FOURNET, Michel, F-74350 Cuvat (FR); MARAVAL, Frédéric, F-74190 Passy (FR); NEUMAN, Serge, F-74600 Seynod (FR)
(74) Mandataire: Bugnion Genève
(86) Numéro de dépôt international: PCT/IB2008/050602
(87) Numéro de publication internationale: WO 2008/102306

(56) Documents cités:
- EP-A- 0 838 740
- EP-A- 1 659 462
- WO-A-02/33496
- WO-A-2004/092853
- FR-A- 2 841 016

## Description

L'invention concerne le domaine des installations de commande domotique permettant de piloter le mouvement d'ouvrants de la maison, comme par exemple des volets, portes, fenêtres, portes de garage, portails, écrans ou protections solaires diverses.

Ces installations de commande comportent généralement des points de commande, nomades ou fixes, et des actionneurs, permettant de provoquer le mouvement des ouvrants de la maison.

Les points de commande comprennent un émetteur d'ordres et présentent généralement une interface utilisateur, plus ou moins évoluée, permettant à un utilisateur d'envoyer des ordres de commande vers les actionneurs. L'interface peut ainsi comprendre des boutons poussoirs de commande d'ouverture, de fermeture, ou d'arrêt du mouvement.

Les points de commande peuvent également être des capteurs ou des automatismes, avec ou sans interface utilisateur.

L'actionneur comprend un récepteur d'ordres, qui lui permet de recevoir et d'interpréter des messages en provenance des émetteurs des points de commande.

Dans les systèmes les plus simples, la communication entre émetteur d'ordres et récepteur d'ordres est de type unidirectionnel.

Dans d'autres systèmes de communication dits bidirectionnels, le récepteur et l'émetteur peuvent recevoir un message de communication qui leur est directement adressé.

Dans une telle installation domotique, les ordres de commande sont transmis depuis les points de commande vers les actionneurs de manière filaire ou sans fil. Les communications entre émetteurs d'ordres et récepteurs d'ordres se font de manière très généralisée sur un réseau non câblé, c'est-à-dire par le biais d'ondes électromagnétiques et plus particulièrement d'ondes radiofréquences.

Pour des raisons de sécurité et de confidentialité ou même simplement du fait de l'omnidirectionnalité de la radio, il est nécessaire en préalable à l'utilisation d'une telle installation domotique, d'appairer les émetteurs et les récepteurs devant communiquer ensemble. Ce procédé consiste par exemple à enregistrer, par une procédure particulière dite d'appairage, une adresse contenant un identifiant de l'émetteur au niveau du récepteur. L'appairage peut également consister à enregistrer un identifiant du récepteur au niveau de l'émetteur, ou même d'échanger les deux identifiants. La procédure d'appairage consiste donc à établir un lien virtuel entre un émetteur ou globalement un point de commande et un récepteur ou par extension, un actionneur.

Une fois ce lien virtuel établi, l'émetteur est apte à émettre des trames de communications que le récepteur va recevoir et traiter.

Une trame de communication, et en particulier une trame de commande, comprend outre l'ordre qui lui est associé, l'adresse de l'émetteur à l'origine du message et/ou l'adresse du destinataire. Ainsi, lors de la transmission d'une trame de commande, chaque récepteur à l'écoute déchiffre le message contenu dans la trame, vérifie que celle-ci lui est bien adressée ou si elle contient une adresse qu'il accepte, et génère un ordre d'exécution pour l'actionneur.

Si l'adresse contenue dans la trame est inconnue, le récepteur ignore le message de commande.

Dans le domaine de l'invention, la configuration de l'actionneur ou de son récepteur comprend donc des étapes d'appairage avec divers émetteurs. La configuration comprend également des étapes de réglage de l'actionneur. Celles-ci consistent généralement à faire réaliser par l'actionneur un certain nombre de mouvements qui permettent à celui-ci de déterminer ses paramètres de fonctionnement. Ces étapes peuvent être réalisées automatiquement ou semi-automatiquement par l'actionneur. Les mouvements sont par exemple des mouvements vers des positions de fin de course jusqu'à détecter celles-ci ou des cycles complets de fonctionnement pour déterminer un temps de trajet, le poids de l'écran à manoeuvrer ou une courbe d'effort de manoeuvre par exemple. Lors de ces mouvements de configuration, une unité électronique de l'actionneur détecte des paramètres et les enregistre. Une fois l'actionneur configuré, il est capable de déplacer l'écran piloté dans les limites fixées par les paramètres sauvegardés, lorsqu'il reçoit un ordre d'ouverture ou de fermeture de la part d'un émetteur.

Ces étapes d'appairage ou de configuration des paramètres physiques sont particulièrement importantes et donnent lieu à des ergonomies de pilotage très différentes selon les équipements, souvent à mettre en oeuvre à partir d'émetteurs dont le nombre de boutons des claviers est en général réduit.

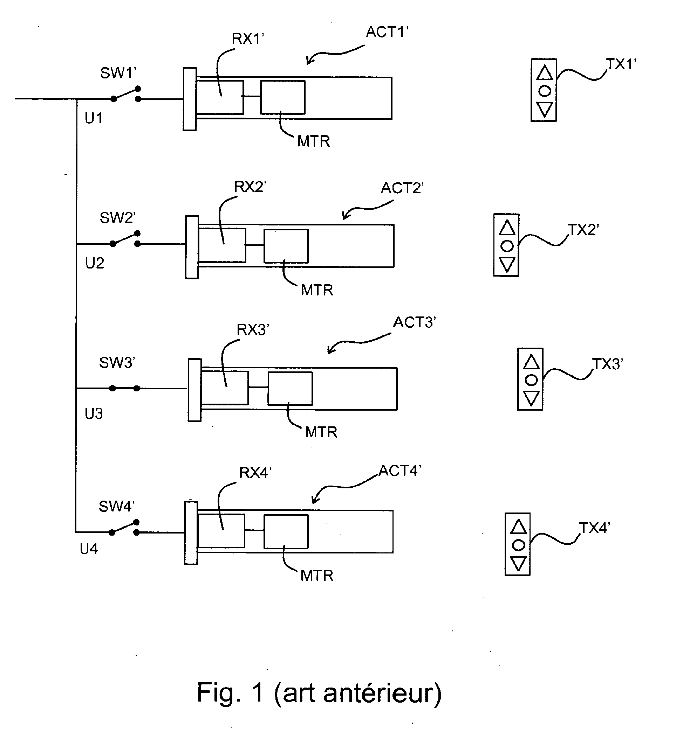

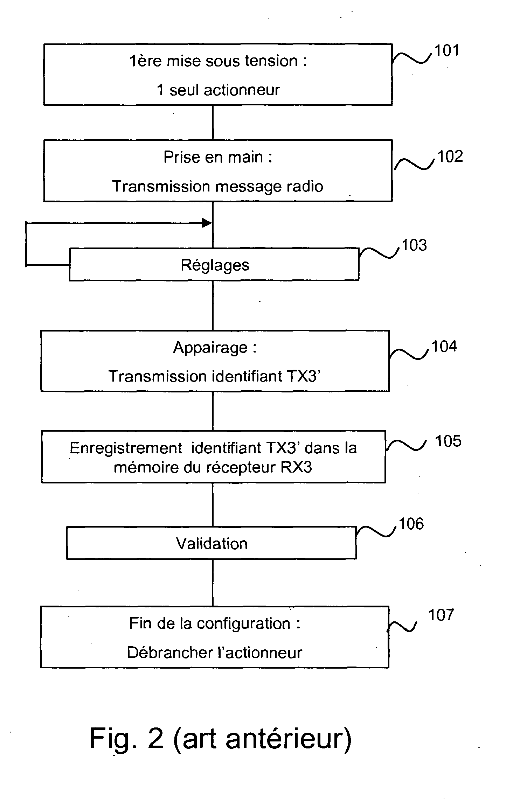

Les figures 1 et 2 illustrent un procédé de configuration tel qu'il est mis en oeuvre dans l'art antérieur. Le système domotique 1 comprend une pluralité d'actionneurs ACT1', ACT2', ACT3', ACT4', comprenant chacun un motoréducteur MTR, et un récepteur radio, les récepteurs étant notés respectivement RX1', RX2', RX3', RX4'. Chaque actionneur comprend également une unité de commande, que par la suite, on considère comprise dans le récepteur de l'actionneur.

Chacun des ces actionneurs est connecté sur une ligne d'alimentation U1, U2, U3, U4 au travers d'un sectionneur individuel SW1', SW2', SW3', SW4'. Un sectionneur élémentaire est constitué d'un bornier de raccordement ou "domino" électrique.

Dans une étape 101 lors de l'installation, seul le sectionneur SW3' est fermé. L'actionneur ACT3' se retrouve donc le seul actionneur radio alimenté dans l'espace radio (constitué par la portée de réception radio du récepteur RX3' de l'actionneur ACT3'). Cet aspect est impératif.

La première mise sous tension de l'actionneur ACT3' (ou d'autres moyens détaillés plus loin) le place dans un mode particulier dit de réglage. Il attend alors un message issu d'un émetteur quelconque. A partir d'un émetteur, l'installateur émet un signal de prise en main du dialogue par une ergonomie particulière sur l'émetteur (par exemple, appui long sur les touches correspondant à la montée et à la descente). Ceci correspond à l'étape 102. Ce signal signifie à l'actionneur ACT3' qu'il doit être réceptif à des ordres de réglage ou à l'appairage d'un nouvel émetteur. L'installateur peut alors poursuivre par une série de réglages de l'actionneur ACT3', en utilisant un émetteur (celui qui a servi à la prise en main ou un autre) (étape 103). Chacun de ces réglages doit se faire dans un ordre précis ou correspondre à une ergonomie particulière sur les boutons de l'émetteur. Lors de ces étapes de configuration, des paramètres de fonctionnement sont mis en mémoire. Une fois les réglages terminés, l'actionneur attend l'appairage avec un émetteur. Cet appairage peut intervenir plus tard dans le cours de l'installation. L'actionneur reste alors non appairé, jusqu'à une nouvelle alimentation et prise en main. A partir d'un nouvel émetteur TX3', en appuyant par exemple sur un bouton de programmation, l'installateur provoque l'émission d'un signal contenant un identifiant de l'émetteur TX3' (étape 104). Celui-ci est mis en mémoire du récepteur RX3' (étape 105). L'installateur doit valider cette opération (étape 106, validation par une action particulière sur l'émetteur).

Avant toute autre configuration mettant en oeuvre un nouvel actionneur, il est impératif de déconnecter de nouveau l'actionneur ACT3' par l'ouverture du sectionneur SW3' (étape 107).

Ainsi que décrit, les émetteurs sont largement sollicités lors des réglages, ce qui implique des ergonomies très élaborées mettant en oeuvre des appuis longs ou courts, des combinaisons d'appuis, pour transmettre des ordres de programmation bien particuliers à chaque étape du procédé. De même, les actionneurs doivent être sélectivement connectés ou déconnectés, ce qui rallonge le temps de configuration de l'installation.

De plus, l'entrée en mode de réglage n'est pas nécessairement aisée. Dans le domaine de la domotique lié aux ouvrants de la maison, il est souvent difficile d'accéder physiquement aux actionneurs une fois installés, et de ce fait, la mise en oeuvre d'une configuration de cet actionneur est parfois difficile. Il n'est pas toujours possible de disposer d'un bouton de programmation, dont l'activation permet de placer l'actionneur dans l'attente d'un réglage ou d'un enregistrement.

Pour un premier réglage, le récepteur peut se placer automatiquement en mode de réglage lors de la première mise sous tension. Il est également possible de reproduire cette entrée en mode de réglage grâce à une séquence particulière de coupure de l'alimentation de l'actionneur.

Par ailleurs, un produit normalement commandé par radio peut, dans certaines conditions, être également commandé ou configuré à partir du secteur, par interruptions de la tension d'alimentation. La demande de brevet EP 1 274 199 détaille en effet ce procédé, qui nécessite comme dans les cas précédents que chaque actionneur soit connecté sur une ligne électrique qui lui est propre.

Pour de nouveaux réglages ou appairages, d'autres moyens doivent ou peuvent être mis en oeuvre.

Une procédure d'appairage d'un premier émetteur à un récepteur inaccessible, puis d'appairage de nouveaux émetteurs sous contrôle du premier émetteur connu, est décrite dans le document FR 2 761 183.

Bien que cette procédure soit relativement simple, elle présente également certains inconvénients, en particulier dans le cas où plusieurs actionneurs sont connectés sur une même ligne électrique. Si le seul émetteur est cassé ou défectueux, il n'est plus possible de distinguer un actionneur des autres pour l'appairer avec un nouvel émetteur. Cette configuration électrique de branchement des actionneurs est donc fortement déconseillée. De plus, l'utilisation d'un émetteur connu pour placer un récepteur en mode de réglage nécessite à nouveau la mise en oeuvre de diverses ergonomies sur une interface comprenant un nombre de boutons souvent limité.

La demande de brevet FR 2 841 016 décrit la problématique de l'accès aux récepteurs sur un chantier et les moyens pour simplifier l'appairage dans un bâtiment tertiaire. Un outil est alors utilisé pour enregistrer une information caractérisant un récepteur ou un émetteur et la transmettre à l'autre objet. Dans un mode particulier de réalisation, l'outil est muni d'un scanner de codes barre, ce qui permet de lire une étiquette optique (code barre) placée sur l'émetteur et reproduisant sa référence ou identifiant. La lecture de l'identifiant de l'émetteur peut être également réalisée grâce à un couplage galvanique, un couplage magnétique ou par voie optique (photodiodes et phototransistors).

D'autre part, les actionneurs et automatismes (commandes, capteurs, unités de commande) compatibles avec un bus LON sont également pourvus d'un identifiant qui les caractérise de manière unique. En particulier, les unités de commande, qui sont associées à un ou plusieurs actionneurs et qui permettent de les piloter, sont généralement munis d'une étiquette détachable sur laquelle est reproduite un code barre, correspondant à l'identifiant de l'unité de commande.

Les identifiants des différentes unités de commande ou automatismes sont lus à partir d'un lecteur de codes barre connecté au PC d'installation. Celui-ci mémorise les différentes informations. Ces identifications permettent au PC d'avoir une image précise de l'architecture complète de l'installation. La reconfiguration du réseau ou sa modification (introduction d'un nouvel élément) nécessite de repasser par l'intermédiaire du PC et de la vision d'ensemble du système, en particulier puisque le protocole vise à la mise en place de groupes pour la communication entre les produits.

L'identification d'un équipement électrique (dans le domaine des équipements HI-Fi) par un code barre est également connue par exemple du document US 6 225 938. Dans ce brevet, le code barre indique le type d'appareil et le format de commande à distance auquel il répond. La lecture de ce code barre par une télécommande munie d'un scanner permet à la celle-ci d'éventuellement se reconfigurer pour être capable de dialoguer avec l'équipement, si elle possède intrinsèquement les données ou programmes pour le protocole de communication demandé. Le brevet US 5,519,878 décrit une solution similaire.

Cependant, dans ce cas, il n'existe pas de problématique d'appairage, dans la mesure où la télécommande commande les équipements par signal infrarouge (faisceau ciblé) et leur fournit le format attendu. D'autre part, le code barre ne traduit pas une information caractérisant l'équipement lui-même (de manière unique), mais uniquement le type d'équipement et son format de communication.

Enfin, la lecture d'information sur les étiquettes à code barre permet de configurer la télécommande (ou le lecteur) et non pas l'équipement à piloter.

Le but de l'invention est de fournir un procédé de configuration d'un équipement remédiant aux inconvénients évoqués précédemment et améliorant les procédés de configuration connus de l'art antérieur. En particulier, l'invention propose un procédé de configuration dans lequel la communication sélective par ondes électromagnétiques entre un équipement domotique particulier d'une installation et un outil de configuration ayant une structure très simple est possible sans intervention préalable sur l'équipement particulier et, notamment, sans intervention préalable sur son alimentation.

En particulier, le procédé de configuration est applicable indépendamment de la connaissance par l'outil du système domotique déjà installé et des liens physiques (lignes d'alimentations) ou virtuels (appairages) déjà établis mettant en oeuvre le récepteur ou les équipements autour de celui-ci.

Le procédé selon l'invention est défini par la revendication 1.

Différents modes d'exécution du procédé de configuration sont définis par les revendications dépendantes 2 à 13.

L'outil de configuration selon l'invention est défini par la revendication 14. Différents modes de réalisation de l'outil de configuration sont définis par les revendications dépendantes 15 à 17.

Le procédé de configuration est basé sur le principe qu'une information caractérisant le récepteur (notamment son identifiant), enregistrée dans la mémoire du récepteur, est reproduite sur un support placé de manière accessible à un installateur et lisible par un lecteur particulier.

La lecture de cette information permet d'identifier de manière très précise le récepteur et d'adresser des messages radio (et donc omnidirectionnels) à sa seule attention.

La mise en mémoire de l'information caractérisant le récepteur, noté identifiant peut être réalisée à plusieurs stades de la production des actionneurs. L'identifiant est par exemple enregistré en mémoire au moment de l'assemblage des composants électroniques, par exemple au moment de la copie de logiciels dans un microprocesseur lié au récepteur.

Cet identifiant est dupliqué sur un support éventuellement distant du récepteur. En effet, il n'est pas nécessaire que l'information caractérisant l'actionneur soit à proximité de celui-ci : contrairement à un bouton poussoir directement monté sur le produit pour activer un mode de fonctionnement particulier, et notamment un mode d'appairage, aucune liaison électrique ou mécanique n'est nécessaire.

Le support de cet identifiant peut être par exemple une étiquette magnétique, une carte perforée, une étiquette RFID ou à codes barre. Celui-ci est préférentiellement attaché à l'actionneur sur un support détachable (par exemple étiquettes autocollantes repositionnables). Les codes barre présentent l'intérêt d'être reproductibles assez facilement et la lecture par un lecteur particulier connu en soi en est aisée.

La duplication peut intervenir au même moment que l'enregistrement de l'information dans la mémoire du récepteur, ou elle peut l'être plus tard dans la chaîne de distribution.

En particulier, un actionneur de volets roulants doit être intégré dans le volet et cette étape est réalisée couramment par un intégrateur. Celui-ci peut, au moment d'une mise sous tension et à l'aide d'un outil particulier, récupérer l'identifiant contenu en mémoire du récepteur et fabriquer alors des étiquettes lisibles.

Une étiquette peut alors être collée sur une lame du volet, tandis qu'un autre exemplaire est conservé avec la notice ou dans le boîtier d'emballage.

Cette dernière opération peut également avoir lieu lors de l'installation du volet roulant motorisé sur un chantier.

Il s'ensuit que l'identifiant de l'actionneur, lorsque celui-ci est installé et inaccessible, reste disponible pour une lecture à l'aide d'un outil. L'étiquette étant collée sur une lame de volet, du côté intérieur à l'habitation bien entendu, elle n'est donc accessible que depuis l'intérieur et ne représente pas une brèche de sécurité.

Dans le cas d'un actionneur de porte de garage par exemple ou de portail, qui sont beaucoup plus exposés, la duplication de l'identifiant peut être conservée dans un lieu sûr.

Pour un système domotique, il est en effet tout à fait concevable de stocker les différents identifiants dupliqués sur une plaquette avec une représentation du plan de l'habitation ou du bâtiment ou sur laquelle il est possible d'indiquer par écrit à quel actionneur correspond l'étiquette (actionneur volet cuisine, chambre enfants/façade ouest, fenêtre de toit mezzanine, etc). Cette plaquette sera conservée en lieu sûr.

L'outil crée facilement un lien avec un récepteur de l'installation domotique. En étant capable d'identifier facilement un seul actionneur parmi plusieurs, notamment dans le cas où ceux-ci sont connectés sur une même ligne électrique, l'outil peut émettre des ordres de configuration à destination d'un actionneur identifié, sans nécessairement être identifié lui-même. Aucune procédure d'appairage préalable n'est nécessaire entre l'outil et les récepteurs du système. Il est donc facilement utilisable à n'importe quel moment dans la vie de l'installation (installation, reconfiguration, etc).

En effet, bien que l'outil puisse tout à fait piloter le mouvement de l'actionneur et non pas seulement permettre de le configurer, celui-ci est utilisé préférentiellement de manière temporaire dans une installation. A tout moment, il est possible de réutiliser l'outil pour modifier ou remettre à jour une installation. Il n'est pas nécessaire d'appairer l'outil à chaque récepteur dans la mesure où celui-ci est capable d'émettre des messages avec un identifiant de récepteur lu (et éventuellement un identifiant d'émetteur lu) : un identifiant propre de l'outil n'a pas besoin d'être transmis. Cependant, un tel appairage est possible.

Outre les informations liées à des objets (émetteur, récepteur) de l'installation domotique, l'outil peut être utilisé pour lire des codes caractéristiques de fonction de réglage ou de commande.

Préférentiellement, les informations lisibles sont caractéristiques du type d'information.

C'est le cas par exemple si l'information lisible comprend d'une part un code déterminant le type d'information (famille d'objet ou de fonction) et d'autre part, un identifiant unique de l'objet. Lors de l'étape de saisie (lecture) des différents codes, le lecteur est capable de reconnaître les différents types de codes et classe de lui-même les informations selon le type défini dans le code lu. Ces informations peuvent alors être stockées dans des mémoires associées à chaque type d'information.

Dans le domaine concerné, le nombre d'objets dans l'installation ou de fonctions et leurs paramètres est maîtrisable, c'est-à-dire qu'il existe au moins un nombre limité de fonctions ou plus précisément de familles de fonctions, ainsi qu'un nombre limité de types d'objets communicants dans l'installation domotique (récepteurs, émetteurs, automatismes).

Une famille de fonctions peut être caractérisée par ses paramètres. Par exemple une fonction de type enregistrement (appairage) nécessite d'être accompagnée d'un identifiant d'émetteur et d'un identifiant de récepteur. Une famille de fonctions de type "réglage automatique de fin de course bas" ne nécessite comme paramètre qu'un identifiant de récepteur. Une famille de fonctions de type "réglage de seuil de sensibilité" nécessite comme paramètre un identifiant de récepteur, ainsi qu'éventuellement un niveau de seuil.

On peut ainsi distinguer au moins trois familles simples de fonctions de configuration, dont les paramètres sont les suivants :
- famille 1 : un identifiant d'actionneur,
- famille 2 : un identifiant d'actionneur et un identifiant d'émetteur,
- famille 3 : un identifiant d'actionneur et un seuil.

D'autres familles de fonctions peuvent être imaginées avec d'autres paramètres, par exemple une famille ayant pour premier paramètre un identifiant d'émetteur pour la configuration de celui-ci. Une autre famille de fonction peut avoir pour paramètres deux identifiants d'objets de même type de manière à ce que ceux-ci puissent communiquer entre eux ou à définir une relation hiérarchique entre eux.

Il est très avantageux de classer les types d'objets ou les types de fonctions, de manière à ce que l'outil puisse repérer facilement le type d'information lue et l'inscrire dans une mémoire correspondante.

Ainsi, il n'est pas nécessaire d'imposer un ordre de lecture des informations nécessaires.

D'autre part, cela permet d'offrir à l'installateur une interface visuelle basique mais très fonctionnelle. Cette interface sera décrite en relation avec les figures.

L'interface et l'ergonomie de retour d'information peuvent être déterminées de manière à indiquer à l'installateur ce que l'outil a déjà en mémoire et/ou les types d'informations qu'il attend.

Par ailleurs, dans la mesure où chaque information lue est enregistrée dans une mémoire bien particulière, il est possible de simplifier encore l'ergonomie de configuration d'une installation.

En effet, un code de fonction peut être conservé en mémoire tant que nécessaire pour le réglage de plusieurs actionneurs. Il suffit donc à l'installateur, suite à la mise en oeuvre d'une première fonction de réglage d'un actionneur, d'utiliser l'outil pour saisir uniquement les identifiants des actionneurs et de valider pour chaque réglage identique suivant.

Parallèlement, l'identifiant d'un actionneur peut être conservé en mémoire si aucun autre code n'est saisi, et plusieurs fonctions de réglage pourront être mises en oeuvre par l'intermédiaire de l'outil sans ressaisir l'identifiant de l'actionneur.

La lecture d'une nouvelle fonction, d'un nouveau paramètre de fonction ou d'un nouvel identifiant remplace le contenu précédent de la mémoire correspondante. Les contenus des mémoires peuvent être aussi effacés après un temps prédéterminé d'inactivité de l'outil.

La configuration réalisée selon le procédé décrit est particulièrement simple. Le procédé a l'avantage très important de simplifier toutes les ergonomies d'appairage et de réglage. En effet, dans une configuration classique et selon les applications et les interfaces, les ergonomies sont différentes et l'installateur doit régulièrement vérifier les procédures d'installation, même s'il est familier des différents produits installés.

Dans la mesure où l'outil est constitué d'un lecteur et d'un émetteur de signaux, et que sa fonction est essentiellement d'intégrer, dans un message radio, l'information lue et de la redistribuer, l'outil est tout à fait pérenne. Les réponses à un message provenant de l'outil sont traitées au niveau de l'actionneur.

Dans un mode de réalisation préféré, l'outil dispose également d'un système d'affichage très simple, composé de quelques diodes lumineuses. Ces diodes électroluminescentes permettent de donner un retour d'information visuel à l'installateur notamment en ce qui concerne les informations en mémoires et/ou les informations attendues.

### Appairage

L'appairage entre un émetteur et un actionneur peut être réalisé de deux manières :
- Par la lecture simple des deux informations liées respectivement à un émetteur et à un actionneur, auquel cas lors de la validation de ces informations, l'outil comprend qu'il s'agit d'une fonction d'appairage et émet un ordre correspondant.
Le réglage de l'actionneur peut être réalisé par l'intermédiaire d'un émetteur classique ou par l'outil lui-même. Celui-ci peut alors présenter une interface de commande plus évoluée, permettant de sélectionner et d'émettre des ordres de configuration très simplement.
- Par lecture d'un code de fonction de type "enregistrement" et des informations liées à un émetteur et à un actionneur.

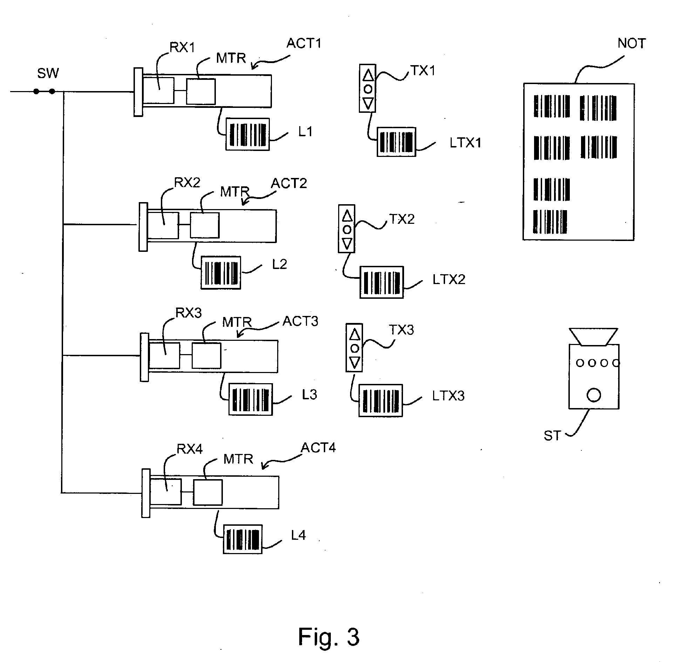

Cette alternative est décrite en regard de la partie réglage et des figures 3 à 7 correspondantes.

Pour sécuriser l'appairage, il est possible de requérir la confirmation d'un enregistrement d'un identifiant d'émetteur au niveau d'un récepteur lorsque celui-ci est déjà appairé à un premier émetteur. Cette confirmation peut par exemple prendre la forme d'un message issu d'un des émetteurs connus, émis dans une plage temporaire suite à l'échange du nouvel identifiant grâce à l'outil.

Cette requête peut être mise en place pour chaque récepteur une fois que l'installation est configurée. De cette manière, l'installation est parfaitement sécurisée contre d'éventuelles tentatives de fraude, de même qu'on peut sécuriser une installation existante par l'inhibition de la fonction de mise en mode de réglage par une double coupure du secteur par exemple.

Par ailleurs, l'invention permet, en simplifiant largement l'appairage, d'appairer de manière temporaire un émetteur à un récepteur et de se servir de celui-ci pour configurer l'actionneur, de manière similaire à celle de l'état de l'art.

Ce lien temporaire peut être construit de manière légèrement différente d'un lien d'appairage durable, c'est-à-dire que l'identifiant de l'émetteur temporaire n'est conservé que pendant un temps limité permettant de procéder aux réglages. Il est donc inutile ensuite que l'installateur procède au désappairage de cet émetteur temporaire.

Dans ce cas, l'outil dispose de deux boutons de validation, un pour l'appairage durable et un pour l'appairage temporaire ou du moins est capable de transmettre deux messages d'appairage temporaire et d'appairage durable. Une fois les informations relatives à un émetteur et à un récepteur mises en mémoire, l'installateur valide l'appairage temporaire par appui sur le bouton dédié. Le message transmis contient l'information d'appairage temporaire et le récepteur gère cette information, par exemple par la mise à zéro d'un compteur de temps relatif à cet appairage.

Si aucune action de configuration n'est mise en oeuvre par l'intermédiaire de cet identifiant dans une période donnée, l'enregistrement de l'identifiant temporaire au niveau de l'actionneur est effacé.

Alternativement, c'est l'outil lui-même qui dispose d'un identifiant propre et que l'installateur appaire successivement temporairement aux différents actionneurs. L'identifiant de l'outil peut être lu sur un support qu'il est possible de détacher au moins temporairement de l'outil, par le lecteur propre de l'outil ou peut être simplement mis en mémoire et rappelé par un bouton spécifique de l'outil. Cet identifiant est alors mis dans une mémoire dédiée aux identifiants d'émetteurs. Si l'objet à appairer est l'outil lui-même (ceci étant déterminé par contrôle de l'identifiant dans la mémoire), le message d'appairage est alors systématiquement un message d'appairage temporaire.

### Réglage

Dans le cadre d'un mode particulier de réalisation de l'invention, une plaquette ou notice comprenant des codes barre de fonctions est fournie à un utilisateur.

Une telle plaquette est connue par ailleurs, par exemple du document US 5 962 839. Ce document décrit un lecteur programmable par l'intermédiaire de lecture de codes barre. Ce lecteur peut être connecté à un moteur électrique, essentiellement de jouet et muni de haut-parleurs. La lecture d'une pluralité de codes barre permet de mettre en oeuvre au niveau du lecteur, une séquence de commande à exécuter, par l'intermédiaire du moteur ou des différents accessoires.

Dans ce document d'un domaine éloigné de la domotique, il n'existe aucune problématique de transmission d'information à distance sans fil dans la mesure où le moteur ou les accessoires du jouet sont directement connectés au lecteur. Par ailleurs, la lecture des codes ne donne naissance qu'à des ordres de commande exécutables, dans un mode de fonctionnement classique.

Selon un premier mode de fonctionnement de la présente invention, chaque actionneur dispose en mémoire d'un certain nombre de codes, associés à des sous-programmes de configuration. Ces sous-programmes sont propres à l'actionneur et/ou à l'application et correspondent à des fonctions de configuration.

L'installateur dispose d'une plaquette (NOT, fig. 3) sur laquelle sont portées une pluralité d'informations lisibles par l'outil, par exemple de codes barre, chacune de ces informations correspondant à un code (par exemple numérique) dont au moins une partie est équivalente aux codes en mémoire des actionneurs.

La plaquette comporte des informations communes à plusieurs actionneurs différents ou est dédiée à un actionneur. Dans ce dernier cas, elle peut être fournie avec chaque actionneur.

Alternativement, les informations lisibles par l'outil (identifiants d'objets l'installation ou codes de fonctions) apparaissent sur un écran relié à un système de gestion de l'installation (ordinateur, PDA), celui-ci pouvant être local ou récupérer des informations à distance via Internet à partir d'un site central sécurisé. Cet écran sert alors de support au même titre que la plaquette précédemment décrite.

L'outil sert donc de lecteur et transmetteur de code, c'est-à-dire qu'il traduit une information lue sous forme d'un code numérique par exemple et intègre ce code numérique dans un message qu'il émet, selon un protocole reconnu par les récepteurs de l'installation.

Comme précédemment décrit, outre la lecture du code, l'outil de configuration est utilisé pour lire l'information caractéristique du récepteur ciblé, c'est-à-dire son identifiant dupliqué sur un support accessible et lisible.

Le message de l'outil contient donc le code relatif au sous-programme à mettre en oeuvre et un identifiant d'actionneur destinataire du message.

Il est donc tout à fait possible d'ajouter des fonctions à un actionneur d'une deuxième génération, et d'utiliser un même outil pour transcrire des codes de fonctions associées à des actionneurs de première génération ou de deuxième génération. Dans ce cas, une nouvelle plaquette de fonctions est fournie à l'installateur, l'outil reste le même.

Si l'outil dispose d'un écran d'affichage, permettant d'afficher le code fonction ou même l'intitulé de la fonction lue sur la plaquette, cela nécessite des mises à jour de l'outil lui-même, mais le cas est bien évidemment envisageable.

Selon un second mode de l'invention non détaillé, l'outil dispose d'une unité de traitement de l'information beaucoup plus développée. Il ne fonctionne donc plus simplement comme un simple lecteur avec transmission de l'information lue, mais il est capable de transmettre au récepteur une information plus élaborée. En d'autres termes, les sous-programmes à mettre en oeuvre pour un réglage particulier sont définis au niveau de l'outil et celui-ci transmet des ordres de configuration en séquence, par exemple un pilotage vers diverses positions, pour la mise en oeuvre de ce réglage.

Ce deuxième mode de réalisation permet d'être compatible avec des produits de générations précédentes. La mise à jour de l'outil peut intervenir régulièrement, par introduction de nouveaux sous-programmes dans les mémoires de l'outil.

Par ailleurs, les séquences à mettre en oeuvre pour un réglage particulier peuvent être apprises par l'actionneur. L'outil transmet alors, pour un nouveau code de fonction, des messages correspondant à des actions à mettre en oeuvre pour cette nouvelle fonction. L'actionneur met celles-ci en mémoire de manière à ce que pour une prochaine transmission du code de fonction appris, la simple transmission du code suffise pour mettre en oeuvre le réglage correspondant.

On peut alors prévoir au niveau de l'actionneur des codes "libres" qui vont pouvoir être utilisés pour y inscrire ces nouvelles fonctions de réglage.

L'invention trouve de plus une application particulièrement avantageuse pour un aspect de diagnostic d'au moins une partie du système. Par exemple, lorsque tous les émetteurs appairés avec un actionneur semblent hors d'usage, il n'est pas possible de vérifier si le problème vient des émetteurs ou de l'actionneur. A l'aide de l'outil, il est possible de sélectionner un identifiant de récepteur, éventuellement un identifiant d'émetteur, et un code de fonction "diagnostic" par exemple. Dans ce cas, le récepteur génère une série de mouvements prédéterminés par le code de fonction "diagnostic". Alternativement, l'outil dispose de touches de commande par lesquelles il peut piloter l'actionneur directement une fois que celui-ci est identifié.

L'installateur vérifie ainsi le bon fonctionnement ou non de l'actionneur et de son récepteur radio.

L'outil peut servir également à faire un diagnostic de réponse de l'actionneur à un ordre issu d'un capteur. Il est par exemple possible de simuler par l'intermédiaire d'une fonction sur la plaquette, l'émission d'un signal de capteur avec un seuil donné. En fonction de la réaction attendue de l'actionneur (par exemple repli d'un store en position intermédiaire) et de la réaction réelle de l'actionneur, l'installateur peut vérifier le fonctionnement correct de la transmission de seuils.

Si une seule fonction pour l'appairage et le désappairage est prévue, la transmission d'un identifiant d'émetteur déjà connu du récepteur provoque son désappairage, tandis qu'un identifiant d'émetteur non connu du récepteur sera mis en mémoire.

Lorsque la plaquette dispose de codes relatifs à des fonctions respectivement d'enregistrement et de désenregistrement, la première sert avantageusement, lorsqu'un émetteur semble défectueux, à réenregistrer cet émetteur déjà appairé et à vérifier si le problème ne venait pas d'une désynchronisation d'identifiant, dans le cas d'un identifiant à code tournant variant selon une séquence prédéfinie à chaque émission et synchronisé par rapport au récepteur.

Pour résoudre des problématiques de sécurité accrue, il est possible de sécuriser les opérations décrites précédemment. Diverses procédures peuvent être mises en oeuvre. Un mode de réalisation consiste à utiliser une clé pour l'installation, cette clé étant également sous forme d'information lisible par l'outil décrit et déclarée spécifique à l'installation.
Cette clé est conservée en lieu sûr.

Le dessin annexé représente, à titre d'exemples, un mode d'exécution d'un procédé de configuration selon l'invention, un mode de réalisation d'une installation selon l'invention et un mode de réalisation d'un outil de configuration selon l'invention.
La figure 1 est un schéma d'une installation domotique connue de l'art antérieur.
La figure 2 est un ordinogramme d'une procédure de configuration d'une installation domotique selon l'art antérieur.
La figure 3 est un schéma d'un mode de réalisation d'une installation domotique selon l'invention.
La figure 4 est un ordinogramme d'une procédure de configuration mise en oeuvre dans un mode d'exécution d'un procédé de configuration selon l'invention.
La figure 5 est un mode de réalisation d'un outil de configuration selon l'invention.
La figure 6 est un ordinogramme d'une procédure de configuration mise en oeuvre dans un mode d'exécution d'un procédé de configuration selon l'invention.
La figure 7 est un ordinogramme d'une procédure de configuration mise en oeuvre dans un mode d'exécution d'un procédé de configuration selon l'invention.
La figure 8 est un ordinogramme d'une procédure de configuration mise en oeuvre dans un mode d'exécution d'un procédé de configuration selon l'invention.

Les différents actionneurs ACT1-ACT4 peuvent être disposés de la même manière que dans la figure 1 ou éventuellement en parallèle. Dans ce cas, un seul sectionneur SW, par exemple au niveau de l'armoire électrique suffit pour l'ensemble des actionneurs comme représenté à la figure 3.

Chaque actionneur ACT1-ACT4 possède une étiquette L1-L4 sur laquelle est dupliqué un identifiant (IDRX1-IDRX4) de l'actionneur dans un format lisible par un outil de configuration ST.

De même, un émetteur TX3 à appairer dispose d'une étiquette sur laquelle est dupliqué son identifiant IDTX3.

D'autres émetteurs TX1 et TX2 disposent également d'une étiquette sur laquelle est dupliqué leur identifiant IDTX1, IDTX2.

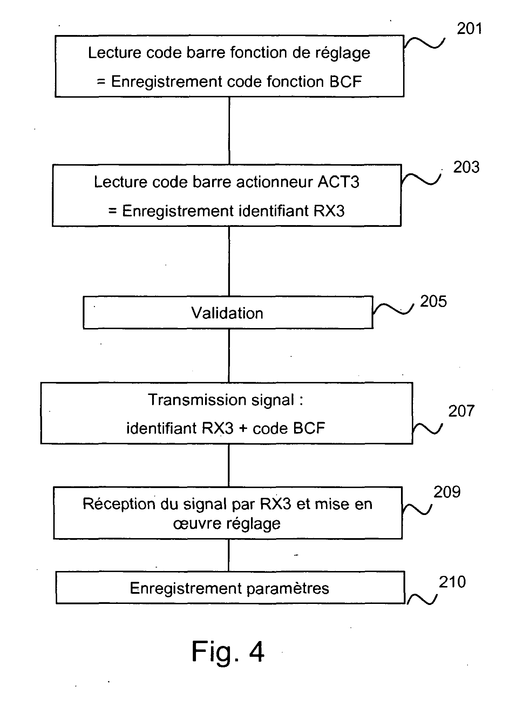

La figure 4 schématise les différentes étapes d'une procédure de configuration de l'actionneur ACT3 mettant en oeuvre une fonction de réglage de la famille 1 définie plus haut.

Lors d'une étape 201, l'utilisateur lit à l'aide de l'outil sur une plaquette de réglage NOT, représentée en figure 3, une information représentative de la fonction de réglage choisie. Cette information est mise dans une mémoire MEMF.

Dans une étape 203, l'installateur lit à l'aide de l'outil ST l'information reproduite sur l'étiquette L3 de l'actionneur ACT3, ce qui place cette information dans une mémoire MEMR.

Suite à une étape 205 de validation par l'installateur, l'outil ST construit un message à destination du récepteur RX3. Ce message contient l'identifiant du destinataire du message (RX3) ainsi qu'une instruction ou un code numérique correspondant à la fonction de réglage lue. Ce message est émis lors d'une étape 207. Lorsque le récepteur RX3 reçoit ce message, il met en oeuvre au cours d'une étape 209 les étapes de réglages telles qu'elles sont prédéfinies au niveau de l'actionneur ACT3 et correspondant à la fonction de réglage. Les paramètres détectés lors de cette étape de réglage sont mis en mémoire au cours d'une étape 210.

Une fois les valeurs contenues dans les mémoires MEMF et MEMR utilisées pour générer un premier message de configuration à destination de l'équipement ACT3, le contenu des mémoires MEMF et MEMR mais aussi MEMS et MEMT peut être modifié par effacement ou par enregistrement de nouvelles valeurs servant à définir un nouveau message de configuration à destination d'un équipement qui peut être l'équipement ACT3 ou un autre. Dans le cas d'un envoi successif d'un nouveau message de configuration à l'équipement ACT3, il n'est pas nécessaire de ressaisir l'identifiant RX3, celui-ci se trouvant encore en mémoire MEMR. Ce sont donc les contenus des mêmes mémoires MEMT, MEMR, MEMF et MEMS qui sont utilisés pour générer les différents messages de configuration.

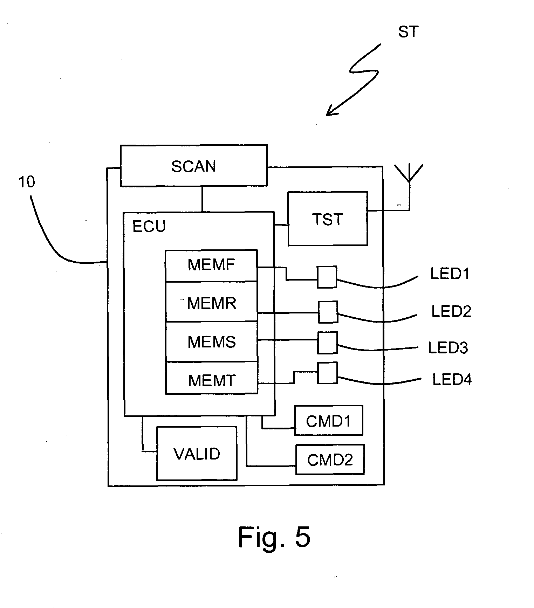

La figure 5 illustre de manière plus détaillée l'outil de réglage ST.

Cet outil comprend dans un boîtier 10 d'une part un lecteur SCAN de codes barre et d'autre part un émetteur TST de messages radio, compatible avec les récepteurs de l'installation. Le lecteur et l'émetteur sont reliés à une unité électronique de traitement ECU, comprenant un microprocesseur et quatre mémoires MEMF, MEMR, MEMT, MEMS connectées sur différentes entrées/sorties du microprocesseur.

L'outil ST comprend de plus des diodes électroluminescentes de retour d'information, ces diodes électroluminescentes étant également gérées au travers du microprocesseur.

Chaque diode électroluminescente est représentative de l'état d'une des mémoires et elle est par exemple allumée lorsque la mémoire correspondante est remplie.

L'outil ST comprend également des boutons de commande VALID, CMD1, CMD2, le premier servant à confirmer et à lancer un message généré à partir du contenu des mémoires MEMF, MEMR, MEMT, MEMS, les seconds pouvant permettre l'émission directe de messages de commande de mouvement ou d'arrêt par exemple.

Chaque mémoire est destinée à recevoir un type d'information différent :
- la mémoire MEMR est destinée à recevoir un identifiant d'un équipement domotique,
- la mémoire MEMT est destinée à recevoir un identifiant d'un émetteur d'ordres,
- la mémoire MEMF est destinée à recevoir un code déterminant une fonction de réglage comme par exemple « réglage d'une fin de course haute » ou « enregistrement d'un seuil de sensibilité »,
- la mémoire MEMS est destinée à recevoir un code déterminant un paramètre nécessaire à l'exécution de la fonction de réglage codée par la valeur contenue dans la mémoire MEMF, par exemple, un paramètre de seuil de sensibilité nécessaire à la fonction « enregistrement d'un seuil de sensibilité ».

Les valeurs contenues dans ces mémoires utilisées pour générer un premier message de configuration à destination d'un équipement peuvent être modifiées par effacement ou par enregistrement de nouvelles valeurs servant à définir un nouveau message de configuration à destination d'un équipement.

L'outil comprend aussi des moyens logiciels de mise en oeuvre du procédé de configuration objet de l'invention. Il comprend ainsi des moyens de réalisation des étapes de la revendication 1 et des moyens d'exécution de ces étapes dans un ordre logique. Notamment, l'outil de configuration comprend un moyen de génération d'un message comprenant le contenu de la mémoire MEMR destinée et le contenu de la deuxième mémoire MEMF, MEMT.

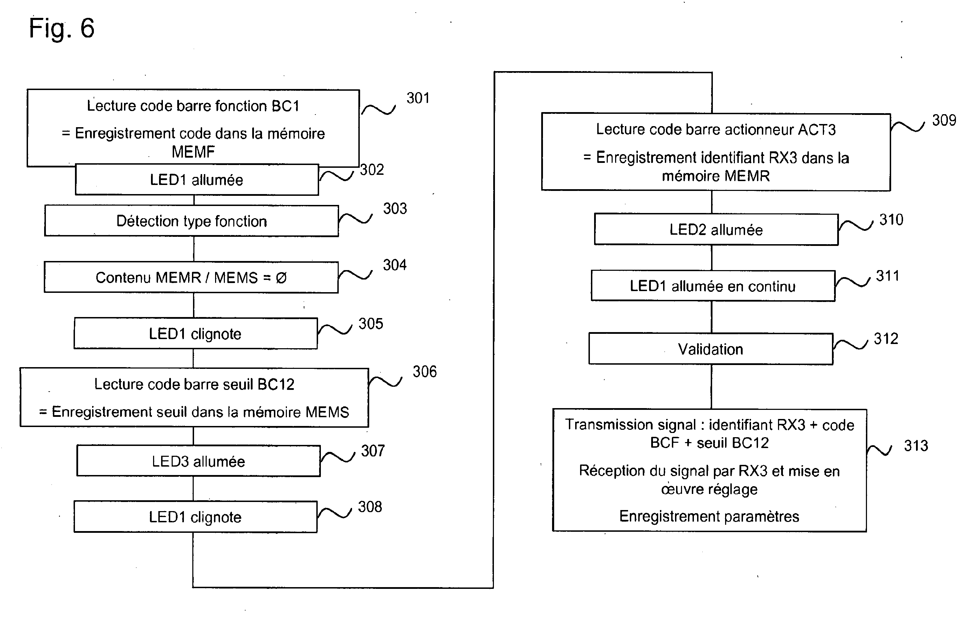

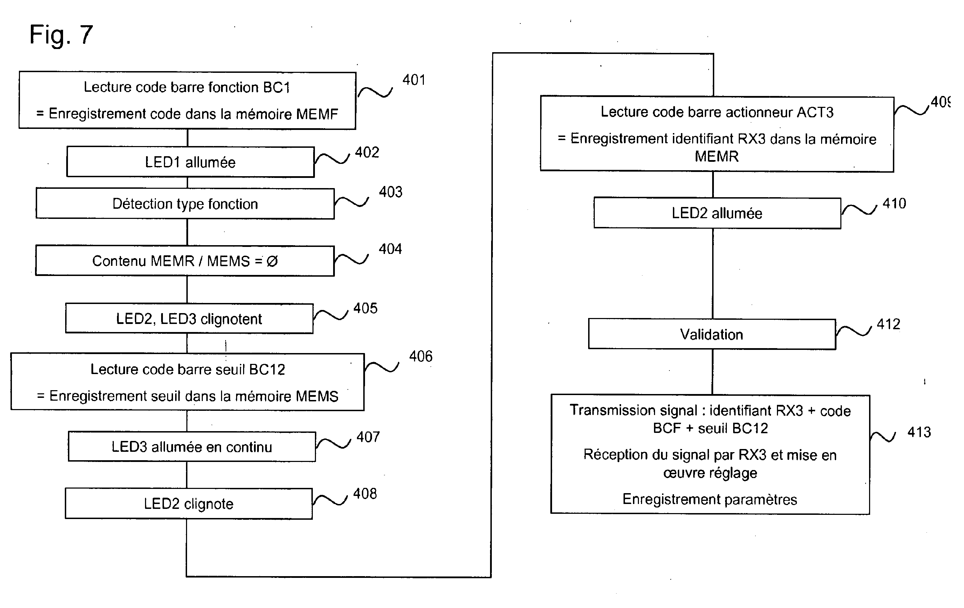

Les figures 6 et 7 schématisent différentes étapes de procédures de configuration de l'actionneur ACT3 mettant en oeuvre une fonction de réglage de la famille 3 définie plus haut. La figure 6 illustre en outre une ergonomie de retour d'information mise en place sur l'outil ST.

Pour simplifier le diagramme, les différentes mémoires de l'outil sont vides lors de l'étape de réglage décrite.

Dans l'exemple, l'utilisateur veut régler un seuil de sensibilité de détection d'obstacle. Il s'agit d'une fonction de famille 3, c'est-à-dire que deux paramètres sont attendus : l'identifiant d'un actionneur et un niveau de seuil. L'installateur dispose sur sa plaquette d'un code barre BC1 correspondant à cette fonction et de plusieurs codes barre BC11-BC15 représentant les niveaux de sensibilités. L'actionneur à configurer dispose également d'un code barre BCR placé sur l'équipement qu'il pilote.

Dans une étape 301, l'installateur sélectionne et lit le code de fonction BC1 à l'aide de l'outil de configuration ST. Ce code est enregistré dans la mémoire MEMF de l'outil. La diode électroluminescente correspondante aux fonctions s'allume alors au cours d'une étape 302. Le type de fonction auquel correspond ce code est automatiquement détecté dans une étape 303, c'est-à-dire que les paramètres de fonction attendus sont définis.

Dans une étape 304, l'unité électronique de l'outil vérifie si les mémoires MEMR et MEMS contiennent déjà une information. Dans le cas d'exemple, les mémoires sont vides. L'unité électronique provoque alors un clignotement de la diode électroluminescente correspondant aux fonctions au cours d'une étape 305.

L'installateur utilise ensuite l'outil pour scanner (étape 306) un des codes barre de seuil BC11 à BC15. Le seuil correspondant est mis en mémoire. La diode électroluminescente correspondant au seuil s'allume également (étape 307). La diode électroluminescente de fonction continue de clignoter (308).

L'installateur utilise ensuite l'outil pour scanner (étape 309) le code barre BCR de l'actionneur à configurer. L'identifiant correspondant est mis en mémoire. La diode électroluminescente correspondant aux actionneurs s'allume également (étape 310). La diode électroluminescente de fonction cesse de clignoter (étape 311).

L'installateur est alors informé que tous les paramètres attendus sont entrés. Il lui reste à valider la fonction (étape 312), c'est-à-dire provoquer l'émission d'un message de configuration, contenant les informations relatives à l'actionneur, à la fonction de réglage et à son seuil (étape 313), équivalente à l'étape 210 précédemment décrite.

La figure 7 illustre un organigramme d'une ergonomie alternative, pour le même type de fonction de réglage.

Dans une étape 401, l'installateur sélectionne et lit le code de fonction BC1 à l'aide de l'outil de configuration ST. Ce code est enregistré dans la mémoire MEMF de l'outil. La diode électroluminescente correspondante aux fonctions s'allume alors au cours d'une étape 402. Le type de fonction auquel correspond ce code est automatiquement détecté dans une étape 403, c'est-à-dire que les paramètres de fonction attendus sont définis.

Dans une étape 404, l'unité électronique de l'outil vérifie si les mémoires MEMR et MEMS contiennent déjà une information. Dans le cas d'exemple, les mémoires sont vides. L'unité électronique provoque alors un clignotement des diodes électroluminescentes correspondant aux deux paramètres attendus, au cours d'une étape 405. L'installateur est alors informé des paramètres attendus.

L'installateur utilise ensuite l'outil pour scanner (étape 406) un des codes barre de seuil BC11 à BC15. Le seuil correspondant est mis en mémoire. La diode électroluminescente correspondant au seuil s'allume alors en continu (étape 407). La diode électroluminescente correspondant aux actionneurs continue de clignoter (408).

L'installateur utilise ensuite l'outil pour scanner (étape 409) le code barre BCR de l'actionneur à configurer. L'identifiant correspondant est mis en mémoire. La diode électroluminescente correspondant aux actionneurs s'allume alors en continu (étape 410). La diode électroluminescente de fonction est également toujours allumée.

L'installateur est alors informé que tous les paramètres attendus sont entrés. Il lui reste à valider la fonction (étape 412), c'est-à-dire provoquer l'émission d'un message de configuration, contenant les informations relatives à l'actionneur, à la fonction de réglage et à son seuil (étape 413), équivalente à l'étape 210 précédemment décrite.

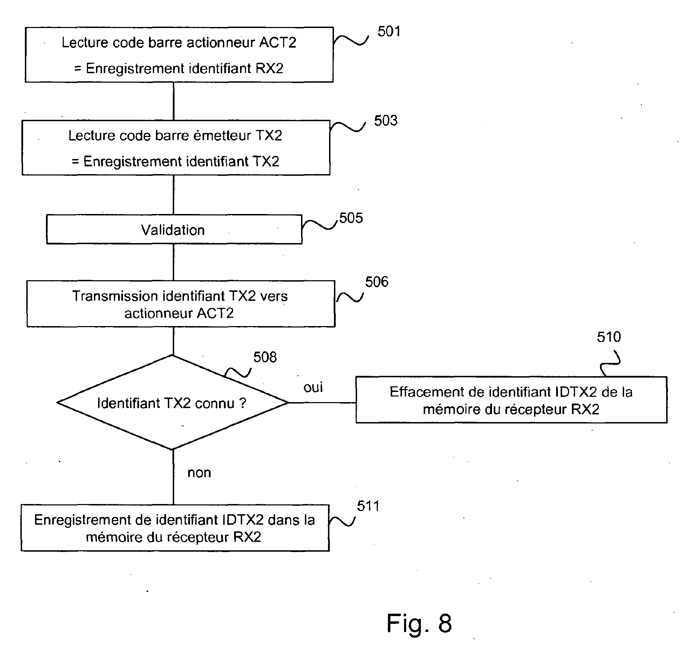

La figure 8 schématise les différentes étapes d'une procédure de configuration de l'actionneur ACT2 mettant en oeuvre une fonction de réglage de la famille 2 définie plus haut. La figure 8 décrit en particulier le fonctionnement de l'outil dans un cas d'appairage, dans lequel la plaquette NOT précédemment décrite n'est pas nécessaire.

Lors d'une étape 501, l'installateur utilise l'outil ST de manière à lire l'information reproduite sur l'étiquette L2 de l'actionneur ACT2 à configurer, c'est-à-dire que l'information est déchiffrée et mise en mémoire de l'outil. Il utilise de nouveau l'outil pour lire ensuite l'information reproduite sur l'étiquette LTX2 de l'émetteur TX2 et cette information est placée en mémoire (étape 503).

Lors d'une étape 505, l'utilisateur valide ces informations, par exemple par appui sur un bouton de validation de l'outil ST. Ceci déclenche une étape 506 dans laquelle l'outil ST émet un message à destination du récepteur RX2, contenant l'identifiant de l'émetteur TX2 ainsi qu'une instruction par défaut correspondant à l'appairage. Lorsque le récepteur RX2 reçoit ce message, il détermine au cours d'une étape 508 si l'identifiant de l'émetteur TX2 est déjà en mémoire. Si tel est le cas (étape 510), il considère alors que cet émetteur doit être désappairé, ce qui correspond à effacer le lien virtuel existant entre cet émetteur et ce récepteur.

En revanche, si l'identifiant de l'émetteur TX2 n'est pas connu, le récepteur RX2 procède à l'enregistrement de celui-ci et donc à l'établissement d'un nouveau lien d'appairage entre ces deux objets au cours d'une étape 511. Ces étapes 510 et 511 terminent le procédé d'appairage.

Dans l'état de l'art, la seule possibilité pour retirer un identifiant d'un émetteur défectueux d'une liste d'enregistrement en mémoire d'un récepteur consiste à effacer l'ensemble de ces enregistrements. En effet, comme la communication avec le récepteur passe par l'intermédiaire de l'émetteur, si celui-ci est défectueux, il ne peut y avoir d'action possible. Dans certains cas, l'installateur va devoir provoquer une remise à zéro de tous les réglages.

Dans l'étape 511, que l'émetteur soit un premier émetteur appairé ou un nouvel autre émetteur, le récepteur réagit de la même façon. Pour un système plus sécurisé, l'enregistrement d'un nouvel émetteur ne se fait que si le récepteur a reçu au préalable ou s'il reçoit consécutivement un message d'un émetteur connu.

Une fois les valeurs contenues dans les mémoires MEMT et MEMR utilisées pour générer un premier message de configuration à destination de l'équipement ACT2, le contenu des mémoires MEMT et MEMR mais aussi MEMF et MEMS peut être modifié par effacement ou par enregistrement de nouvelles valeurs servant à définir un nouveau message de configuration à destination d'un équipement qui peut être l'équipement ACT2 ou un autre. Ce sont donc les contenus des mêmes mémoires MEMT, MEMR, MEMF et MEMS qui sont utilisés pour générer les différents messages de configuration.

Par générer un message, on comprend également la génération d'une succession de messages dans le but de transmettre les informations lues et mémorisées au niveau de l'outil, les informations pouvant être éventuellement transmises dans des trames de communications séparées.

## Revendications

1. Procédé de configuration d'au moins un équipement (ACT1, ACT2, ACT3, ACT4) dans une installation domotique, chaque équipement étant identifié de manière unique grâce à un identifiant enregistré en mémoire et dupliqué sur un support (L1, L2, L3, L4) accessible de manière à ce que cet identifiant soit visible, le procédé de configuration utilisant un outil de configuration (ST) comprenant un moyen de saisie (SCAN), un moyen (TST) d'émission de signaux radioélectriques et au moins une première (MEMR) et une deuxième mémoire (MEMF, MEMT) et le procédé comprenant plusieurs itérations des étapes suivantes :
- générer, au niveau de l'outil de configuration, un message comprenant le contenu de la première mémoire destinée à recevoir, suite à une saisie, l'identifiant d'un équipement et le contenu de la deuxième mémoire destinée à recevoir, suite à une saisie, une information d'un premier type,
- émettre, grâce au moyen d'émission de signaux radioélectriques, le message sous forme d'un signal électromagnétique,
- réaliser, au niveau de l'équipement, une action au moins partiellement déterminée par l'information du premier type.

2. Procédé de configuration selon la revendication 1, **caractérisé en ce que** le message est émis par l'outil de configuration à destination de l'équipement,

3. Procédé de configuration selon la revendication 1 ou 2, **caractérisé en ce qu'**il comprend une étape supplémentaire autorisant la modification des valeurs contenues dans les première et deuxième mémoires de l'outil de configuration.

4. Procédé de configuration selon l'une des revendications précédentes, **caractérisé en ce que** l'action déterminée est un lancement d'une fonction de configuration et/ou un enregistrement de paramètres de fonctionnement de l'équipement.

5. Procédé de configuration selon l'une des revendications précédentes, **caractérisé en ce que** l'identifiant définit au moins un type d'équipement et/ou **en ce que** le premier type d'information définit au moins partiellement un type d'action déterminé.

6. Procédé de configuration selon l'une des revendications précédentes, **caractérisé en ce que** des informations d'un premier type sont inscrites sur une notice.

7. Procédé de configuration selon l'une des revendications précédentes, **caractérisé en ce que** le premier type d'informations est caractéristique d'un émetteur d'ordres et **en ce que** l'action est une création d'un lien d'appairage entre l'émetteur d'ordres et l'équipement, le lien d'appairage étant enregistré au niveau de l'équipement.

8. Procédé de configuration selon la revendication précédente, **caractérisé en ce que** le lien d'appairage est temporaire.

9. Procédé de configuration selon l'une des revendications 1 à 6, **caractérisé en ce que** le premier type d'information est caractéristique d'une fonction de configuration et **en ce que** l'action est une exécution de cette fonction de configuration et de mise en mémoire de paramètres relatifs à cette fonction de configuration.

10. Procédé de configuration selon la revendication 9, **caractérisé en ce que** l'étape de génération du message comprend l'utilisation du contenu d'une troisième mémoire (MEMS) de l'outil de configuration, cette troisième mémoire étant destinée à recevoir, suite à une saisie, une information d'un deuxième type, l'utilisation étant telle que le message comprend le contenu de la troisième mémoire et le deuxième type d'information étant caractéristique d'un paramètre de la fonction de configuration ou d'un objet de type émetteur d'ordres.

11. Procédé de configuration selon l'une des revendications précédentes, **caractérisé en ce qu'**il comprend, préalablement à l'étape de génération d'un message, une étape d'information visuelle au niveau de l'outil de configuration pour signifier que les étapes de saisie ont ou non été réalisées correctement.

12. Procédé de configuration selon l'une des revendications précédentes, **caractérisé en ce que** les identifiants et/ou les informations du premier type et/ou les informations du deuxième type se présentent sous la forme d'un code barre.

13. Outil (ST) de configuration d'une installation domotique comprenant des moyens matériels (SCAN, TST, ECU, MEMF, MEMR, MEMS, MEMT) et logiciels de mise en oeuvre du procédé de configuration selon l'une des revendications précédentes et **caractérisé en ce que** les moyens matériels comprennent un moyen de saisie (SCAN), un moyen (TST) d'émission de signaux électromagnétiques, des mémoires (MEMF, MEMR, MEMS, MEMT) et une unité électronique de traitement (ECU).

14. Outil de configuration selon la revendication précédente, **caractérisé en ce que** le moyen de saisie comprend un scanner optique.

15. Outil de configuration selon la revendication 13 ou 14, **caractérisé en ce que** les moyens logiciels comprennent des programmes stockés en mémoire pour régir le fonctionnement de l'outil de configuration.

## Patentansprüche

1. Konfigurationsverfahren mindestens einer Ausrüstung (ACT1 , ACT2, ACT3, ACT4) in einer domotischen Anlage, wobei jede Ausrüstung dank eines Kennworts, das im Speicher registriert und auf einem Medium (L1, L2, L3, L4) dupliziert ist, das derart zugänglich ist, dass dieses Kennwort sichtbar ist, eindeutig identifiziert ist, wobei das Konfigurationsverfahren ein Konfigurationswerkzeug (ST) verwendet, das ein Erfassungsmittel (SCAN), ein Sendemittel (TST) funkelektrischer Signale und mindestens einen ersten (MEMR) und einen zweiten Speicher (MEMF, MEMT) umfasst, wobei das Verfahren mehrere Iterationen der folgenden Schritte umfasst:
- Erzeugen, auf Ebene des Konfigurationswerkzeugs, einer Nachricht, die den Inhalt des ersten Speichers, der dazu bestimmt ist, nach einer Erfassung das Kennwort einer Ausrüstung zu empfangen, und den Inhalt des zweiten Speichers, der dazu bestimmt ist, nach einer Erfassung eine Information eines ersten Typs zu empfangen, umfasst,
- Senden, dank des Sendemittels funkelektrischer Signale, der Nachricht in Form eines elektromagnetischen Signals,
- Durchführen, auf Ebene der Ausrüstung, einer mindestens teilweise durch die Information des ersten Typs bestimmten Aktion.

2. Konfigurationsverfahren nach Anspruch 1, **dadurch gekennzeichnet, dass** die Nachricht vom Konfigurationswerkzeug in Richtung der Ausrüstung gesendet wird.

3. Konfigurationsverfahren nach Anspruch 1 oder 2, **dadurch gekennzeichnet, dass** es einen zusätzlichen Schritt umfasst, der die Änderung der im ersten und zweiten Speicher des Konfigurationswerkzeugs enthaltenen Werte erlaubt.

4. Konfigurationsverfahren nach einem der vorangehenden Ansprüche, **dadurch gekennzeichnet, dass** die bestimmte Aktion ein Starten einer Konfigurationsfunktion und/oder eine Registrierung von Funktionsparametern der Ausrüstung ist.

5. Konfigurationsverfahren nach einem der vorangehenden Ansprüche, **dadurch gekennzeichnet, dass** das Kennwort mindestens einen Ausrüstungstyp definiert und/oder dass er erste Informationstyp mindestens teilweise einen bestimmten Aktionstyp definiert.

6. Konfigurationsverfahren nach einem der vorangehenden Ansprüche, **dadurch gekennzeichnet, dass** Informationen eines ersten Typs in einer Anleitung eingetragen sind.

7. Konfigurationsverfahren nach einem der vorangehenden Ansprüche, **dadurch gekennzeichnet, dass** der erste Informationstyp für einen Befehlssender charakteristisch ist und dass die Aktion eine Schaffung einer Paarungsverknüpfung zwischen dem Befehlssender und der Ausrüstung ist, wobei die Paarungsverknüpfung auf Ebene der Ausrüstung registriert ist.

8. Konfigurationsverfahren nach vorangehendem Anspruch, **dadurch gekennzeichnet, dass** die Paarungsverknüpfung temporär ist.

9. Konfigurationsverfahren nach einem der Ansprüche 1 bis 6, **dadurch gekennzeichnet, dass** der erste Informationstyp für eine Konfigurationsfunktion charakteristisch ist und dass die Aktion eine Durchführung dieser Konfigurationsfunktion und der Speicherung von Parametern ist, die sich auf diese Konfigurationsfunktion beziehen.

10. Konfigurationsverfahren nach Anspruch 9, **dadurch gekennzeichnet, dass** der Schritt der Erzeugung der Nachricht die Verwendung des Inhalts eines dritten Speichers (MEMS) des Konfigurationswerkzeugs umfasst, wobei dieser dritte Speicher dazu bestimmt ist, nach einer Erfassung eine Information eines zweiten Typs zu empfangen, wobei die Verwendung derart ist, dass die Nachricht den Inhalt des dritten Speichers umfasst und der zweite Informationstyp für einen Parameter der Konfigurationsfunktion oder für ein Objekt vom Typ Befehlssender charakteristisch ist.

11. Konfigurationsverfahren nach einem der vorangehenden Ansprüche, **dadurch gekennzeichnet, dass** es vor dem Schritt des Erzeugens einer Nachricht einen Schritt einer visuellen Information auf Ebene des Konfigurationswerkzeugs umfasst, um anzuzeigen, dass die Erfassungsschritte korrekt durchgeführt wurden oder nicht.

12. Konfigurationsverfahren nach einem der vorangehenden Ansprüche, **dadurch gekennzeichnet, dass** sich die Kennwörter und/oder die Informationen des ersten Typs und/oder die Informationen des zweiten Typs in Form eines Strichcodes darstellen.

13. Konfigurationswerkzeug (ST) einer domotischen Anlage, die Hardware-(SCAN, TST, ECU, MEMF, MEMR, MEMS, MEMT) und Softwaremittel zur Umsetzung des Konfigurationsverfahrens nach einem der vorangehenden Ansprüche umfasst und **dadurch gekennzeichnet ist, dass** die Hardwaremittel ein Erfassungsmittel (SCAN), ein Sendemittel (TST) elektromagnetischer Signale, Speicher (MEMF, MEMR, MEMS, MEMT) und eine elektronische Verarbeitungseinheit (ECU) umfassen.

14. Konfigurationswerkzeug nach vorangehendem Anspruch, **dadurch gekennzeichnet, dass** das Erfassungsmittel einen optischen Scanner umfasst.

15. Konfigurationswerkzeug nach einem der Ansprüche 13 oder 14, **dadurch gekennzeichnet, dass** die Softwaremittel Programme umfassen, die im Speicher gespeichert sind, um die Funktion des Konfigurationswerkzeugs zu regeln.

## Claims

1. A method of configuring at least one item of equipment (ACT1, ACT2, ACT3, ACT4) in a home automation installation, each item of equipment being uniquely identified thanks to an identifier recorded in memory and duplicated on a medium (L1, L2, L3, L4) accessible so that this identifier is visible, the configuring method using a configuring tool (ST) comprising an inputting means (SCAN), a radio signal transmission means (TST) and at least a first memory (MEMR) and a second memory (MEMF, MEMT), the method comprising several iterations of the following steps:
- the step of generating, in the configuring tool, a message comprising the content of the first memory intended for receiving, after an input, the identifier of an item of equipment and the content of the second memory intended for receiving, after an input, information of a first type;
- the step of transmitting, by the radio signal transmission means, the message in the form of an electromagnetic signal; and
- the step of carrying out, in the item of equipment, an action at least partially determined by the information of the first type.

2. The configuring method as claimed in claim 1, wherein the message is transmitted by the configuring tool to the item of equipment.

3. The configuring method as claimed in claim 1 or 2, which includes an additional step allowing the values contained in the first and second memories of the configuring tool to be modified.

4. The configuring method as claimed in one of the preceding claims, wherein the determined action is the start of a configuring function and/or the recording of operating parameters of the item of equipment.

5. The configuring method as claimed in one of the preceding claims, wherein the identifier defines at least one type of item of equipment and/or the first type of information at least partly defines a determined type of action.

6. The configuring method as claimed in one of the preceding claims, wherein information of a first type is written on a notice.

7. The configuring method as claimed in one of the preceding claims, wherein the first type of information is characteristic of a command transmitter and wherein the action is the creation of a pairing link between the command transmitter and the item of equipment, the pairing link being recorded in the item of equipment.

8. The configuring method as claimed in the preceding claim, wherein the pairing link is a temporary link.

9. The configuring method as claimed in one of claims 1 to 6, wherein the first type of information is characteristic of a configuring function and wherein the action is the execution of this configuring function and the storing of parameters relating to this configuring function.

10. The configuring method as claimed in claim 9, wherein the message generation step comprises the use of the content of a third memory (MEMS) of the configuring tool, this third memory being intended to receive, after an input, information of a second type, the use being such that the message comprises the content of the third memory and the second type of information being characteristic of a parameter of the configuring function characteristic or of an object of the command transmitter type.

11. The configuring method as claimed in one of the preceding claims, which comprises, prior to the message generation step, a visual information step in the configuring tool in order to indicate whether or not the inputting steps have been correctly carried out.

12. The configuring method as claimed in one of the preceding claims, wherein the identifiers and/or the information of the first type and/or the information of the second type are in the form of a barcode.

13. A tool (ST) for configuring a home automation installation, comprising hardware (SCAN, TST, ECU, MEMF, MEMR, MEMS, MEMT) and software for implementation of the configuring method as claimed in one of the preceding claims and **characterized in that** the hardware comprises an inputting means (SCAN), an electromagnetic signal transmission means (TST), memories (MEMF, MEMR, MEMS, MEMT) and an electronic processing unit (ECU).

14. The configuring tool as claimed in the preceding claim, wherein the inputting means comprises an optical scanner.

15. The configuring tool as claimed in claim 13 or 14, wherein the software means comprise programs stored in memory for governing the operation of the configuring tool.
